## Europäisches Patentamt
## European Patent Office
## Office européen des brevets

(19)

(11) Numéro de publication: **0 327 415**
A1

(12) ## DEMANDE DE BREVET EUROPEEN

(21) Numéro de dépôt: 89400111.4

(51) Int. Cl.⁴: **B 62 D 25/08**

(22) Date de dépôt: **13.01.89**

(30) Priorité: **15.01.88 FR 8800408**

(43) Date de publication de la demande:
**09.08.89 Bulletin 89/32**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Monteil, Michel**
**25, rue de Versailles**
**F-78150 le Chesnay (FR)**

(74) Mandataire: **Ernst-Schonberg, Michel et al**
**REGIE NATIONALE DES USINES RENAULT (S. 0267) 8 &**
**10, avenue Emile Zola**
**F-92109 Boulogne Billancourt Cédex (FR)**

(54) **Assemblage d'une cloison pare-feu et d'un poste de conduite avec une carrosserie de véhicule automobile.**

(57) Assemblage d'une cloison pare-feu (25) et d'un poste de conduite (20), avec une carrosserie (10) de véhicule automobile dans laquelle le bord inférieur du pare-brise (22) s'étend longitudinalement au-dessus d'un compartiment (1) moteur, et où la cloison pare-feu (25) se prolonge vers le haut par un plateau et s'étend sous la glace du pare-brise et dont les extrémités latérales dans la zone des montants (3) des côtés de caisse possèdent des surfaces de fixation auxdits montants, caractérisé par le fait qu'une partie des surfaces de fixation est disposée dans un plan sensiblement horizontal en avant du bord inférieur du pare-brise et que l'autre partie des surfaces de fixation située dans la zone des montants des côtés de caisse est disposée sous des surfaces d'appuis horizontales du plateau de part et d'autre de celui-ci et réunies l'une à l'autre par une liaison étanche entre le bord de la cloison et des éléments du plancher du véhicule placés en relation mutuelle d'accostage.

FIG.1

EP 0 327 415 A1

**Description**

## ASSEMBLAGE D'UNE CLOISON PARE-FEU ET D'UN POSTE DE CONDUITE AVEC UNE CARROSSERIE DE VEHICULE AUTOMOBILE

L'invention concerne un assemblage d'une cloison pare-feu et d'un poste de conduite avec une carrosserie de véhicule automobile.

La publication US-A-4582156 décrit un assemblage d'une cloison pare-feu avec un poste de conduite pour former un module de montage susceptible d'être relié rigidemment à la carrosserie du véhicule. A cet effet, la cloison est assemblée préalablement sur un support transversal dont les extrémités opposées portent des plaques de montage situées à proximité des parois latérales opposées des montants verticaux de la structure avant de la carrosserie.

Dans un tel assemblage, les plaques de montage du module sont en relation d'emboîtement avec des cavités de forme conjuguée prévues sur la structure. L'assemblage connu se propose de la sorte de réaliser automatiquement le centrage transversal et longitudinal du module préalablement à l'exécution de la liaison avec la structure de la carrosserie.

La demanderesse a constaté que les carrosseries dont les montants verticaux de la structure sont situés dans la zone de l'habitacle à proximité des logements d'organes de suspension placés dans le compartiment moteur favorisaient la transmission des vibrations mécaniques à l'habitacle.

Par ailleurs, lorsque la base du pare-brise s'étend au-dessus du compartiment moteur, la structure de carrosserie ne peut pas comporter de cloisons transversales conventionnelles susceptibles de canaliser l'écoulement de l'air de ventilation, de recueillir les eaux de ruissellement et de rigidifier la partie postérieure de ce compartiment.

L'invention a pour objet une solution au problème précité et concerne plus particulièrement un assemblage d'une cloison pare-feu et d'un poste de conduite dans lequel la cloison se prolonge vers le haut par un plateau et s'étend sous la glace du pare-brise et dont les extrémités latérales, dans la zone des montants des côtés de caisse, possèdent des surfaces de fixation auxdits montants.

Selon l'invention une partie des surfaces de fixation est disposée dans un plan sensiblement horizontal en avant du bord inférieur du pare-brise et l'autre partie des surfaces de fixation située dans la zone des montants des côtés de caisse est disposée sous des surfaces d'appuis horizontales du plateau de part et d'autre de celui-ci et réunies l'une à l'autre par une liaison étanche entre le bord de la cloison et des éléments du plancher placés en relation mutuelle d'accostage.

L'assemblage ainsi réalisé contribue à la rigidité de la structure avant de la carrosserie en reconstituant les liaisons mécaniques et l'étanchéité d'une structure conventionnelle à éléments soudés.

En particulier l'assemblage proposé assure la liaison transversale des chapelles d'ancrage des têtes d'amortisseurs de la suspension de l'essieu moteur. La liaison longitudinale améliorée desdites chapelles avec les montants des côtés de caisse ainsi obtenue absorbe les couples de rotation exercés sur ces mêmes chapelles au cours du roulement et des changements de trajectoire du véhicule.

D'autres caractéristiques et avantages de l'invention ressortiront de la description d'un exemple de réalisation de l'assemblage faite en référence au dessin annexé dans lequel :

     - La figure 1 est une vue en perspective séparée de la structure avant de la carrosserie et du poste de conduite.

     - La figure 2 est une vue en perspective d'un côté de la structure avant.

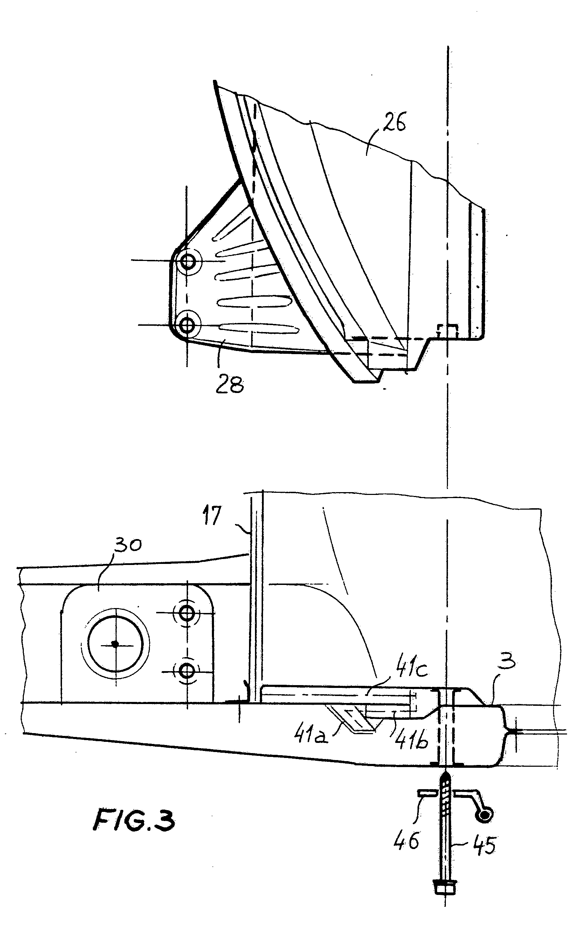

     - La figure 3 est une vue de dessus d'un côté latéral de la structure avant et du module de montage correspondant au poste de conduite.

     - La figure 4 est une vue en perspective des éléments constitutifs du tablier.

     - Les figures 5 et 6 représentent les sections longitudinales de l'assemblage suivant les lignes 5-5 et 6-6 de la figure 1.

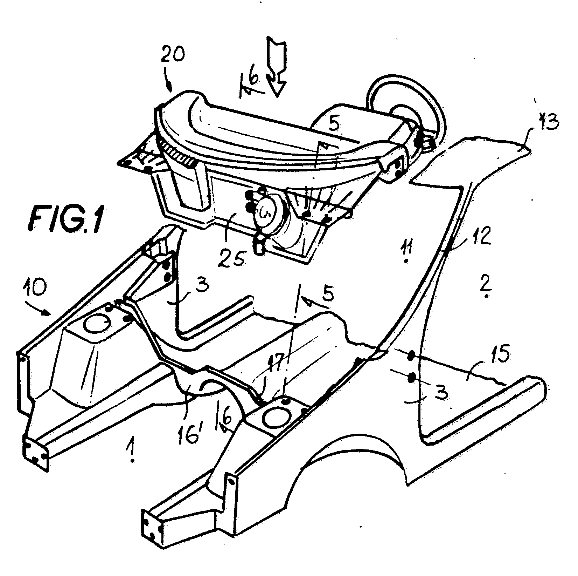

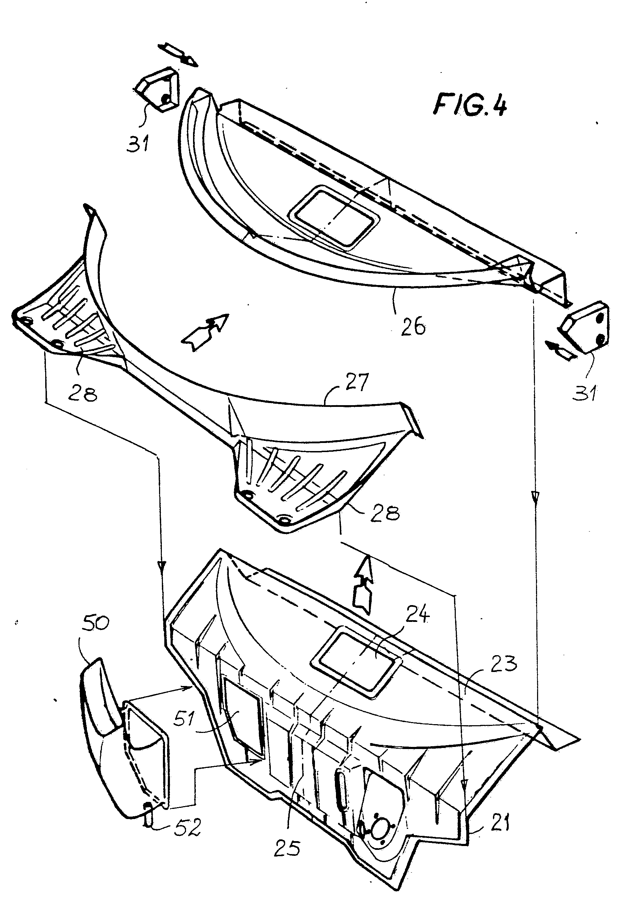

A la figure 1, une carrosserie 10 de véhicule automobile montre une baie de pare-brise 11 qui s'étend entre les montants 12 du pavillon 13. Une tôle de plancher 15 se prolonge vers l'avant en 16 et est doublée par une tôle de renfort 16' portant un bord d'accostage 17 et d'étanchéité du poste de conduite 20. Ainsi que cela est représenté à la figure 4, ce dernier est composé d'une cloison 21, dont la partie supérieure sous la forme d'un plateau 23 comporte un orifice 24 de sortie d'air de chauffage et de ventilation dans l'habitacle du véhicule par des moyens de distribution et de répartition d'air non représentés.

La partie inférieure de la cloison 21 qui constitue l'élément pare-feu 25 comporte un certain nombre d'ouvertures de traversée d'organes constitutifs du poste de conduite tels que la colonne de direction, le pédalier et une gaine de prise d'air.

Le plateau 23 de la cloison 21 est assemblé à un élément de recouvrement 26 et à un élément de doublage 27 par une liaison rigide soudée ou collée. Le bord antérieur de l'élément de recouvrement 26 reçoit l'enduit de collage de la glace 22. Selon une particularité de l'assemblage, l'élément 27 de doublage comporte deux oreilles 28 latérales qui s'étendent longitudinalement en direction des parois supérieures de logements 30 de la carrosserie désignés par le terme "chapelles" qui logent les amortisseurs et assurent la fixation des extrémités supérieures des organes de suspension.

La cloison pare-feu sépare de la sorte le compartiment moteur 1 de l'habitacle 2, ce dernier étant limité latéralement par les montants 3 des côtés de caisse.

Selon l'invention une partie des surfaces de fixation du poste de conduite est disposée dans un plan H sensiblement horizontal en avant du bord inférieur de la glace du pare-brise 22. A cet effet, les oreilles 28 sont traversées par les organes de fixation 29 nécessaires à leur solidarisation avec les chapelles 30.

Une autre partie des surfaces de fixation au poste de conduite est constituée par des obturateurs 31 disposés aux extrémités latérales d'une traverse 32 de structure formée par le plateau 23 formant partie postérieure de la cloison 21, l'élément de recouvrement 26 et par l'élément de doublage 27. Les obturateurs 31 soudés aux éléments de la traverse confèrent de la sorte à la partie supérieure du tablier une rigidité aux efforts de torsion.

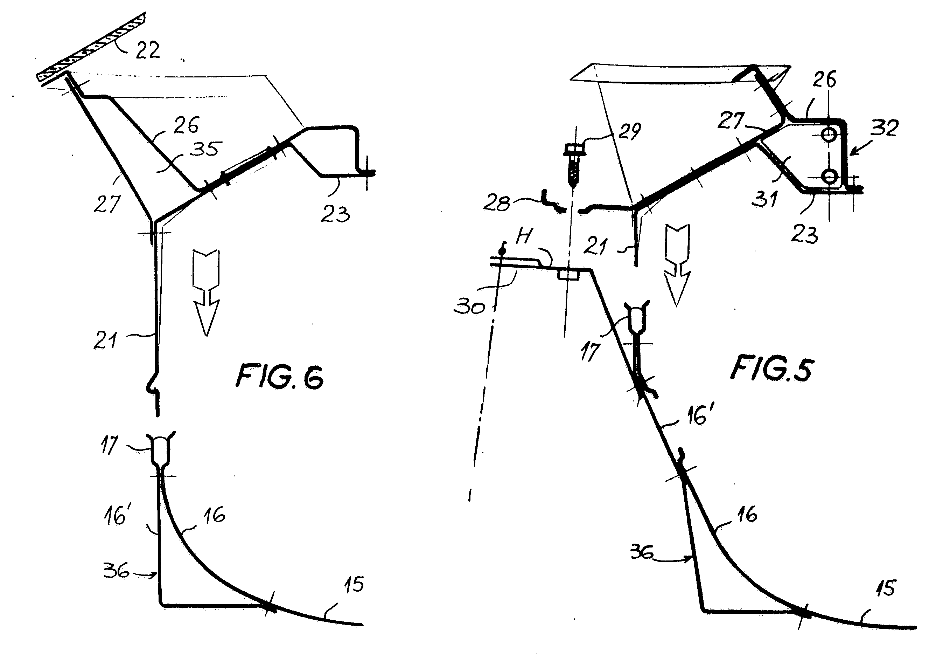

Ainsi que cela est montré à la figure 6, la partie médiane de l'élément de doublage 27 délimite conjointement avec l'élément de recouvrement 26, un canal 35 susceptible d'assurer la circulation de l'air de ventilation qui débouche latéralement dans des conduits de désembrage non représentés.

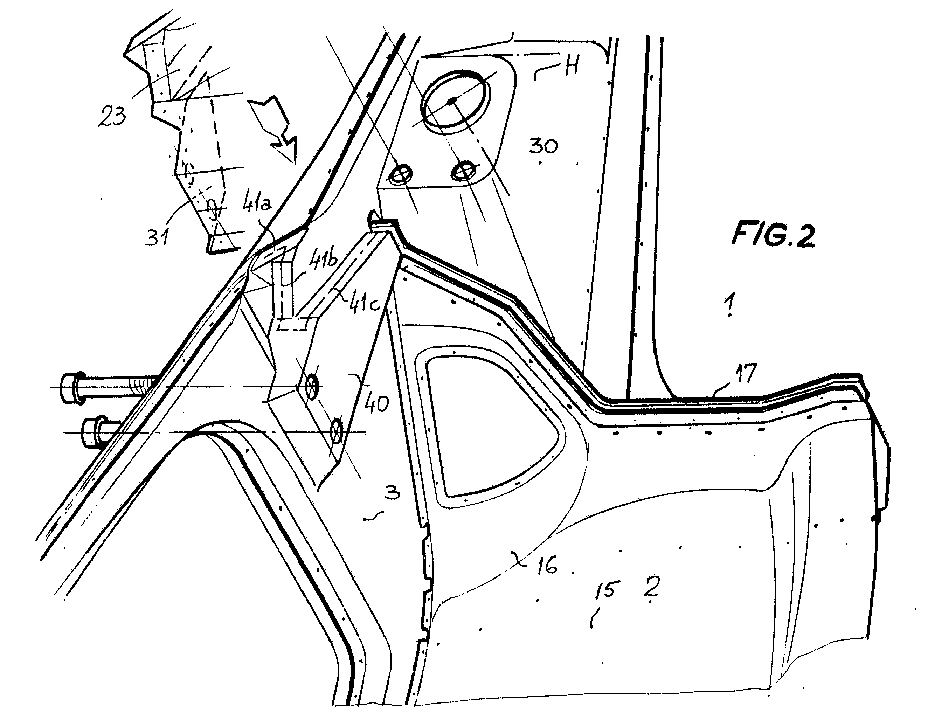

Le bord d'accostage 17 est constitué par une gorge qui s'étend transversalement à la carrosserie ainsi qu'au-dessus des pas sages des roues avant du véhicule ainsi que le montre notamment les figures 1 et 2.

Les passages de roues sont localement formés par l'assemblage de la partie 16 avant du plancher 15 et de la tôle de renfort 16′ qui forment ainsi que cela est montré aux figures 5 et 6, une traverse de plancher 36 en forme de corps creux raccordé latéralement aux montants 3 des côtés de caisse. Les éléments de structure 3, 12, 36 complétés par la traverse du pavillon se conjuguent de la sorte pour réaliser une structure fermée qui assure notamment le positionnement correct des chapelles 30 à la suite de la mise en place du poste de conduite.

Ainsi que cela est montré sur la figure 6, le poste de conduite 20, par le bord antérieur de l'élément de recouvrement, supporte le profil d'étanchéité ou le joint de colle de la glace du pare-brise 22 qui sera positionné puis emboîté dans le profil ou collé après réalisation de l'assemblage du poste de conduite avec la carrosserie.

Le positionnement vertical du poste de conduite 20 par rapport à la carrosserie est assuré par l'ensemble des appuis formés par le sommet des chapelles 30 dans le plan H et par des appuis horizontaux 41 a situés au dessus du niveau du plan H disposés au sommet de bossages latéraux 40 respectivement emboutis et portés par les montants 3.

Le positionnement vertical ainsi obtenu laisse subsister un jeu le long d'un bord 41 b, 41 c entre le bossage 40 et le poste de conduite dans le but d'inclure aisément un mastic d'étanchéité qui prolonge le bord d'accostage et d'étanchéité 17. L'étanchéité entre le compartiment moteur 1 et l'habitacle 2 est ainsi réalisée.

Le positionnement longitudinal du poste de conduite est assuré au niveau du bord d'accostage 17.

Le positionnement transversal du poste de conduite est assuré par un ensemble d'organes de fixation 29, 45.

Ainsi que cela est montré à la figure 2, les zones d'étanchéité sont réparties suivant une succession de trois plans dont le plan médian correspondant à l'appui 41 b possède une inclinaison par rapport à chacun des plans en correspondance avec les zones 41 a-41 c pour définir des angles orientés en sens contraires.

La liaison latérale du poste de conduite avec la carrosserie s'opère au travers des montants 3 au moyen de vis de fixation 45 du charnon 46 supérieur fixe de la porte. A cet effet les vis 45 sont engagées dans chacun des obturateurs 31 et assurent de la sorte la mise en tension de la traverse 32 du poste de conduite et la constitution d'une structure particulièrement rigide. On réalise également de la sorte la mise en conformité de la carrosserie avec son modèle géométrique.

On notera en référence à la figure 4 que l'air de ventilation est canalisé par une tuyère 50 rapportée sur la cloison pare-feu 25. L'air prélevé à l'extérieur est conduit au travers d'un orifice 51 de la cloison 25 pour alimenter un groupe de chauffage et de ventilation non représenté.

Les eaux de ruissellement recueillies dans la tuyère 50 sont évacuées par un orifice 52 à la base de celle-ci.

## Revendications

1 - Assemblage d'une cloison pare-feu (25) et d'un poste de conduite (20), avec une carrosserie (10) de véhicule automobile dans laquelle le bord inférieur du pare-brise (22) s'étend longitudinalement au-dessus d'un compartiment (1) moteur, et où la cloison pare-feu (25) se prolonge vers le haut par un plateau (23) et s'étend sous la glace du pare-brise et dont les extrémités latérales dans la zone des montants (3) des côtés de caisse possèdent surfaces de fixation auxdits montants, caractérisé par le fait qu'une partie des surfaces de fixation est disposée dans un plan sensiblement horizontal en avant du bord inférieur du pare-brise (22) et que l'autre partie des surfaces de fixation située dans la zone des montants de côtés de caisse est disposée sous des surfaces d'appuis horizontales du plateau (23) de part et d'autre de celui-ci et réunies l'une à l'autre par une liaison étanche entre le bord de la cloison et des éléments du plancher du véhicule placés en relation mutuelle d'accostage.

2 - Assemblage selon la revendication 1, caractérisé par le fait que les surfaces de fixation sont situées au contact des parois supérieures des logements (30) d'organes de suspension.

3 - Assemblage selon l'une quelconque des revendications 1 ou 2, caractérisé par le fait que les surfaces de fixation latérales sont formées sur deux obturateurs (31) des extrémités d'une traverse (32) de structure formée par la partie postérieure du plateau (23), un élément de recouvrement (26) et un élément de doublage (27) rigidement reliés entre eux et que l'élément (26) de recouvrement comporte deux oreilles (28) latérales qui s'étendent longitudinalement en direction des parois supérieures des logements d'organes de suspension et portent les surfaces de fixation disposées horizontalement en avant du bord inférieur du pare-brise (22).

4 - Assemblage selon la revendication 3, caractérisé par le fait que la partie médiane de l'élément (27) de doublage délimite notamment avec l'élément (26) de recouvrement un canal (35) de circulation d'air de ventilation.

5 - Assemblage selon l'une quelconque des revendications 1 à 4, caractérisé par le fait que le bord antérieur du poste de conduite (20) supporte le moyen d'étanchéité et de pose de la glace du pare-brise (22).

FIG.1

FIG.2

23
31
41a
41b
41c
40
3
30
H
1
17
16
15  2

EP 0 327 415 A1

FIG.3

FIG.4

FIG. 6

FIG. 5

EP 0 327 415 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 315 646  (OPEL)<br>* figures 1-3 *<br>--- | 1,3 | B 62 D  25/08 |
| A | DE-A-3 613 775  (MAZDA)<br>* figures 7-9 *<br>--- | 1 | |
| A | FR-A-2 503 652  (PORSCHE)<br>--- | | |
| D,A | US-A-4 582 156  (KOCHY et al.)<br>----- | | |

DOMAINES TECHNIQUES RECHERCHES (Int. Cl.4)

B 62 D  25/00

Le présent rapport a été établi pour toutes les revendications

| Lieu de la recherche | Date d'achèvement de la recherche | Examinateur |
|---|---|---|
| BERLIN | 30-04-1989 | LUDWIG H J |